# EUROPEAN PATENT SPECIFICATION

(11) **EP 2 579 689 B1**
(45) Date of publication and mention of the grant of the patent: **02.01.2019**
(21) Application number: 11786294.6
(22) Date of filing: 18.05.2011
(51) Int. Cl.: H05B 37/02, H05B 33/08

(54) **LED TURN-ON CIRCUIT, LAMP, AND ILLUMINATION APPARATUS**
LED-EINSCHALTUNGS-SCHALTKREIS, LEUCHTE UND BELEUCHTUNGSVORRICHTUNG DAMIT
CIRCUIT D'ALLUMAGE DE DEL, LAMPE ET APPAREIL D'ÉCLAIRAGE

(30) Priority: 26.05.2010 JP 2010120266
(43) Date of publication of application: 10.04.2013
(73) Proprietor: Panasonic Intellectual Property Management Co., Ltd., Osaka-shi, Osaka 540-6207 (JP)
(72) Inventor: SETOMOTO, Tatsumi, Osaka-shi, Osaka 540-6207 (JP); ANDO, Tamotsu, Osaka-shi, Osaka 540-6207 (JP); SUGITA, Kazushige, Osaka-shi, Osaka 540-6207 (JP)
(74) Representative: Eisenführ Speiser
(86) International application number: PCT/JP2011/002750
(87) International publication number: WO 2011/148590

(56) References cited:
- JP-A- 2004 327 152
- JP-A- 2005 174 725
- JP-A- 2007 234 415
- JP-A- 2009 105 016
- JP-A- 2010 033 863
- US-A1- 2007 182 347
- US-A1- 2009 195 168
- US-A1- 2009 224 686
- US-A1- 2009 309 505
- US-B2- 6 577 072

## Description

### [Technical Field]

The present invention relates to a lighting circuit for lighting an LED (Light Emitting Diode), a lamp, and a lighting device.

### [Background Art]

In recent years, an energy-saving bulb-type LED lamp has been proposed as an alternative to an incandescent lamp. Some LED lamps have a function of adjusting power to be supplied to an LED in cooperation with an external dimmer. Patent Literature 1 discloses, as a lighting circuit for lighting an LED, a lighting circuit including a direct-current power supply unit and a dimming control unit. The dimming control unit adjusts power supplied from the direct-current power supply unit to an LED according to a dimming signal input from an external dimmer. With technology disclosed in Patent Literature 1, as the external dimmer reduces a dimming level, the power supplied from the direct-current power supply unit to the LED is gradually reduced, and therefore brightness of an LED lamp is gradually reduced. US 6,577,072 describes an LED lamp device that includes a power supply unit supplied with an alternating-current power supply voltage, and an LED lamp constituted by one or a plurality of serially connected LEDs connected to output terminals of the power supply unit. The power supply unit obtains a rectified wave of the alternating-current power supply voltage, admits electric power for only part of a time period in which the voltage of the rectified wave corresponding to each half period of the wave of the alternating-current power supply voltage is higher than or equal to a predetermined value, and uses the electric power as power for lighting the LED lamp.

### [Citation List]

### [Patent Literature]

[Patent Literature 1]
Japanese Patent Application Publication No. 2007-234415

### [Summary of Invention]

### [Technical Problem]

In a case where a single dimmer is used to dim a plurality of LED lamps together, brightness varies among LED lamps as there is an error in voltage-current characteristics among LEDs. The variation in brightness of an LED lamp is so small that it will not be recognized as a defect considering sensitivity of the human eye.

When the dimming level set by the dimmer is near the lowest level (MIN), however, lighted LED lamps and unlit LED lamps are mixed together as Vf voltage varies among LEDs built into the LED lamps. This will be easily recognized as a defect by the human eye.

The present invention aims to provide technology for preventing lighted lamps and unlit lamps from being mixed together even when the dimming level set by the dimmer is near the lowest level.

### [Solution to Problem]

In accordance with the present invention a lighting circuit in accordance with claim 1 is provided. One aspect of the present invention is a lighting circuit that receives power from an alternating-current power supply via a dimmer to light an LED, the lighting circuit comprising: a rectification circuit; a switching power supply unit connected to the rectification circuit and including a first switching element; a control circuit performing on-off control on the first switching element so as to adjust power to be supplied to the LED; and a second switching element causing the control circuit to stop performing the on-off control on the first switching element when a dimming level set by the dimmer becomes equal to or lower than a predetermined level.

Another aspect of the present invention is a lamp comprising: the above-mentioned lighting circuit; and the LED connected to the switching power supply unit included in the lighting circuit.

Yet another aspect of the present invention is a lighting device comprising: the above-mentioned lamp; and a lighting fixture.

### [Advantageous Effects of Invention]

With the above-mentioned structure, the second switching element forcibly causes the control circuit to stop performing the on-off control on the first switching element when the dimming level set by the dimmer becomes equal to or lower than the predetermined level. Therefore, in the case where a single dimmer is used to dim a plurality of lamps together, it is possible to prevent lighted lamps and unlit lamps from being mixed together even when the dimming level set by the dimmer is near the lowest level.

### [Brief Description of Drawings]

FIG. 1 is a sectional view illustrating a configuration of a lamp in an embodiment of the present invention.
FIG. 2 is a circuit diagram for a lighting circuit included in a lamp in Embodiment 1 of the present invention.
FIG. 3 illustrates a relation of on-time to voltage input to a PWM limit terminal when voltage input to a brightness input terminal is 3 V.
FIG. 4 illustrates voltage waveforms at nodes Nil, N12, N13 and N14 when the dimming level set by the dimmer is at the highest level (MAX), at an intermediate level (MID) and at the lowest level (MIN).
FIG. 5A illustrates a change in voltage at the node N13 when the dimming level is continuously changed from the highest level to the lowest level. FIG. 5B illustrates a change in voltage at the node N14 when the dimming level is continuously changed from the highest level to the lowest level.
FIG. 6 illustrates a relation between voltage applied to an LED and a luminous flux.
FIGs. 7A and 7B schematically illustrate an effect of Embodiment 1 of the present invention.
FIG. 8 is a circuit diagram for a lighting circuit included in a lamp in a first example.
FIG. 9 is a circuit diagram for a lighting circuit included in a lamp in a second example.
FIGs. 10A to 10D each illustrate oscillation.
FIG. 11 is a circuit diagram for a lighting circuit included in a lamp in a modification of Embodiment 1 of the present invention.
FIG. 12 is a circuit diagram for a lighting circuit included in a lamp in a modification of the second example.
FIG. 13 is a circuit diagram for a lighting circuit included in a lamp in another modification of Embodiment 1 of the present invention.
FIG. 14 illustrates a configuration of a lighting device.

### [Description of the Embodiment]

The following describes embodiments of the present invention in detail, with reference to the drawings.

### (Embodiment 1)

### <External Form>

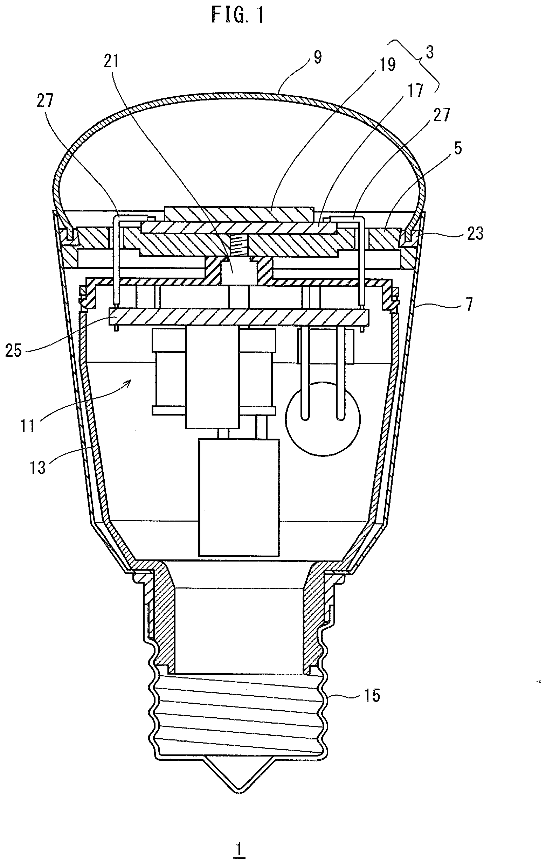

FIG.1 is a sectional view illustrating a configuration of a lamp in an embodiment of the present invention.

A lamp 1 includes an LED module 3, a mounting member 5, a case 7, a globe 9, a lighting circuit 11, a circuit holder 13 and a base member 15. The LED module 3 includes LEDs as a light source, and is mounted on the mounting member 5 provided at one end of the case 7. The globe 9 covers the LED module 3. The lighting circuit 11 is for lighting the LEDs. The circuit holder 13 stores therein the lighting circuit 11 and is provided within the case 7. The base member 15 is provided at the other end of the case 7.

The LED module 3 includes an insulating substrate 17 in which the LEDs are implemented, and a sealing body 19 that covers the LEDs on the insulating substrate 17. The sealing body 19 includes, for example, a translucent material and a conversion material that converts a wavelength of light emitted from the LEDs into a given wavelength. Specifically, the sealing body 19 has been molded from a silicone resin in which phosphor particles are dispersed.

The mounting member 5 is a disc-shaped member including a high thermal conductive material, and is connected to the circuit holder 13 by a screw 21. An example of the high thermal conductive material is a metallic material such as aluminum. An outer circumferential surface of the mounting member 5 is in contact with an inner circumferential surface of the case 7, so that heat generated by the LED module 3 is conducted to the case 7 via the mounting member 5.

The case 7 is a cylindrical member including a material with high thermal radiation properties. An example of the material with high thermal radiation properties is a metallic material such as aluminum. The circuit holder 13 is housed in the case 7.

The globe 9 fits onto a groove formed by combining the mounting member 5 with the case 7, and is fixed to the mounting member 5 and the case 7 with an adhesive agent 23 filled in the groove.

The lighting circuit 11 is made by implementing various electronic components on the insulating substrate 25, and is fixed to an inner surface of the circuit holder 13. An output terminal of the lighting circuit 11 is electrically connected with an input terminal of the LED module 3 by a wire 27.

The circuit holder 13 includes an insulating material. An example of the insulating material is a synthetic resin (specifically, polybutylene terephthalate (PBT)).

The base member 15 is to be attached to a socket of a lighting fixture, and to receive power via the socket. Specifically, an Edison base may be used as the base member 15. The base member 15 is fixed to the circuit holder 13. The base member 15 is electrically connected with an input terminal of the lighting circuit 11 by a wire.

### <Circuit Configuration>

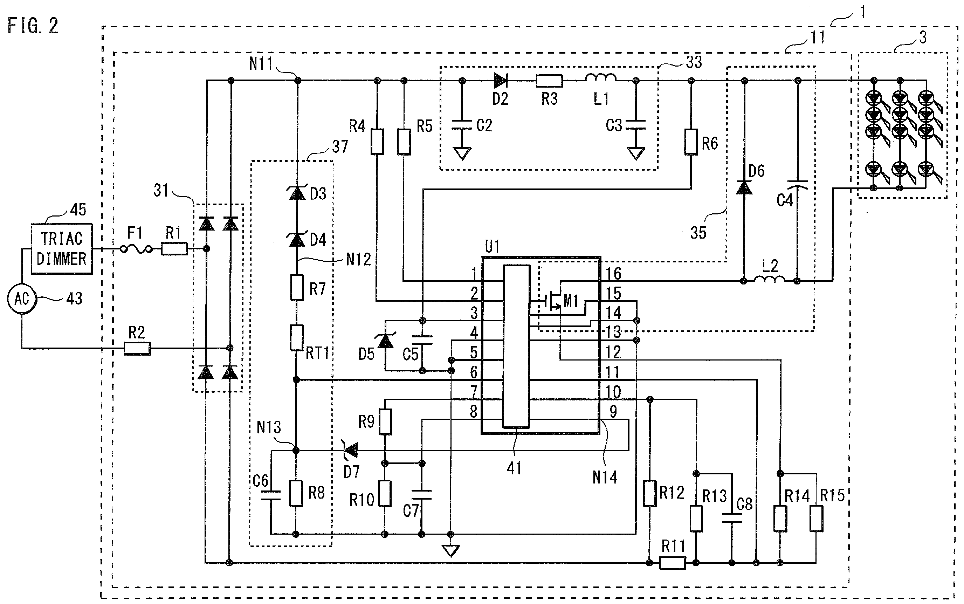

FIG. 2 is a circuit diagram for a lighting circuit included in a lamp in Embodiment 1 of the present invention.

The lamp 1 includes the LED module 3 and the lighting circuit 11. The lamp 1 receives power from an alternating-current power supply 43 via a dimmer 45 using phase control.

The LED module 3 is connected to a switching power supply unit 35, and includes two sets (equivalent to 40 [W]) or four sets (equivalent to 60 [W]) of series connected bodies connected in parallel. Each of the series connected bodies is composed of 24 LEDs connected in series.

The lighting circuit 11 mainly includes a rectification circuit 31, a noise filter circuit 33, the switching power supply unit 35, a dimming level detection circuit 37 and a control circuit 41.

The rectification circuit 31 rectifies the whole of alternating voltage input via the dimmer 45. The rectification circuit 31 outputs pulsating voltage.

The noise filter circuit 33 is connected to the rectification circuit 31, and functions as a noise filter and a smoothing circuit. The noise filter circuit 33 outputs direct voltage.

The switching power supply unit 35 has a function of adjusting power supplied to the LED module 3, and is a so-called DC-DC converter. A buck chopper DC-DC converter is used in the present embodiment, although there are many DC-DC converters, in addition to the buck chopper DC-DC converter, such as a single forward DC-DC converter, a flyback DC-DC converter, a push-pull DC-DC converter, a half bridge DC-DC converter, a full bridge DC-DC converter, a magamp DC-DC converter, a boost chopper DC-DC converter and a buck-boost chopper DC-DC converter. Note that a DC-DC converter other than the buck chopper DC-DC converter may be used. Specifically, the switching power supply unit 35 includes an inductor L2, a switching element M1, a rectifying element D6 and a capacitor C4.

The dimming level detection circuit 37 has a function of detecting a dimming level set by the dimmer 45. Specifically, the dimming level detection circuit 37 includes a resistor voltage divider, a capacitor C6 and Zener diodes D3 and D4. The resistor voltage divider is composed of resistance elements R7, RT1 and R8. The capacitor C6 smoothes voltage output from the resistor voltage divider. Each of the Zener diodes D3 and D4 is inserted into a signal line connecting the resistor voltage divider and the rectification circuit 31. Each of the Zener diodes D3 and D4 functions as a switching element that switches off when an instantaneous value of voltage output from the rectification circuit 31 (voltage at the node N11) is equal to or lower than a predetermined value. The predetermined value is determined by total Zener voltage of the Zener diodes D3 and D4. With this structure, low-level noise components included in the voltage output from the rectification circuit 31 are removed, and thus the dimming level set by the dimmer 45 is accurately detected. Voltage output from the dimming level detection circuit 37 (voltage at the node N13) reduces as the dimming level set by the dimmer 45 reduces. Therefore, the voltage output from the dimming level detection circuit 37 can be used as a dimming signal indicating the dimming level.

The control circuit 41 performs on-off control on the switching element M1 included in the switching power supply unit 35. An LED driver made by sealing the switching element M1 and the control circuit 41 in a single package may be used. In the present embodiment, NXP's SSL2101 is used as an LED driver U1.

A pin 3 of the LED driver U1 is a power supply input terminal. The power supply input terminal is connected to an output terminal of the noise filter circuit 33 via a power supply line.

A pin 6 of the LED driver U1 is a brightness input terminal. The LED driver U1 is designed to reduce oscillating frequency of an internal oscillation circuit as the dimming level set by the dimmer 45 reduces. In order to achieve the above-mentioned function, the brightness input terminal receives the voltage output from the dimming level detection circuit 37.

Resistance elements R9 and R10 and a capacitor C7 are connected to each of pins 7 and 8 of the LED driver U1. By appropriately setting resistance of each of the resistance elements R9 and R10 and capacitance of the capacitor C7, the oscillating frequency of the internal oscillation circuit is determined.

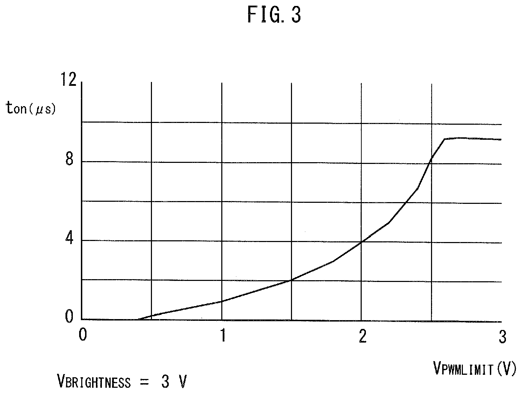

A pin 9 of the LED driver U1 is a PWM limit terminal. The LED driver U1 controls the switching element M1 using PWM. In the PWM control, a duty ratio is determined by comparison between an oscillation signal of the internal oscillation circuit and a reference signal externally input. The reference signal is input into the PWM limit terminal. The LED driver U1 is designed such that on-time is shortened as voltage at the PWM limit terminal (voltage at the node N14) is reduced. For reference, FIG. 3 illustrates a relation of the on-time to voltage input to the PWM limit terminal when voltage input to the brightness input terminal is 3 V. Note that FIG. 3 is excerpted from NXP's SSL2101 datasheet.

The PWM limit terminal is connected to the output terminal of the dimming level detection circuit 37 via a signal line. Therefore, as the dimming level set by the dimmer 45 reduces, the on-time in the PWM control is shortened and a magnitude of current flowing to the LED module 3 is reduced. As a result, brightness of the LED lamp is reduced.

As a switching element that switches off when the dimming level set by the dimmer 45 becomes equal to or lower than a predetermined level, a Zener diode D7 is inserted into a signal line connecting the output terminal of the dimming level detection circuit 37 (node N13) and the PWM limit terminal (node N14). The following describes a function of the Zener diode D7.

### <Function of Zener Diode D7>

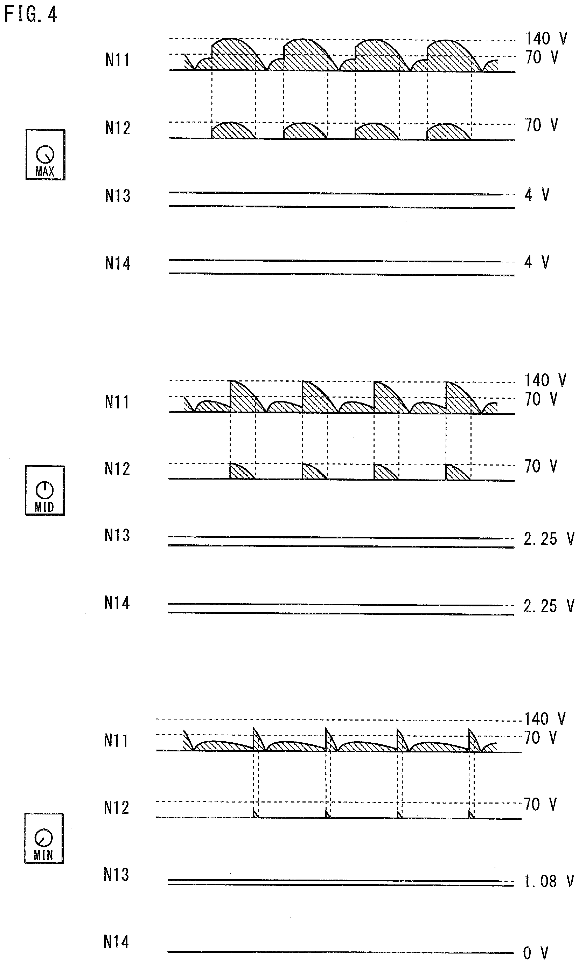

FIG. 4 illustrates voltage waveforms at the nodes N11, N12, N13 and N14 when the dimming level set by the dimmer is at the highest level (MAX), at an intermediate level (MID) and at the lowest level (MIN).

The following describes a case where an RMS value of voltage of an alternating-current power supply 43 is 100 V, and total Zener voltage of the Zener diodes D3 and D4 is 70 V.

At the node N11, the voltage output from the rectification circuit 31 appears.

At the node N12, voltage obtained by subtracting 70 V from the voltage at the node N11 appears, only when the instantaneous value of the voltage at the node N11 exceeds 70 V.

Appears at the node N13 is voltage remaining after the voltage at the node N12 is divided by the resistance elements R7, RT1 and R8, and then smoothed by the capacitor C6.

At the node N14, the voltage at the node N13 appears, only when the voltage at the node N13 exceeds Zener voltage of the Zener diode D7.

In FIG. 4, the voltage at the node N13, which corresponds to the voltage output from the dimming level detection circuit 37, is 4 V when the dimming level is at the highest level, and 2.25 V when the dimming level is at an intermediate level and 1.08 V when the dimming level is at the lowest level. On the other hand, the voltage at the node N14, which corresponds to the voltage input to the PWM limit terminal of the LED driver U1, is 4 V when the dimming level is at the highest level, and 2.25 V when the dimming level is at an intermediate level and 0 V when the dimming level is at the lowest level.

As described above, when the dimming level is at the lowest level, the voltage at the node N13 is 1.08 V, but the voltage at the node N14 is 0 V. This is because the voltage at the node N13 is lower than the Zener voltage of the Zener diode D7.

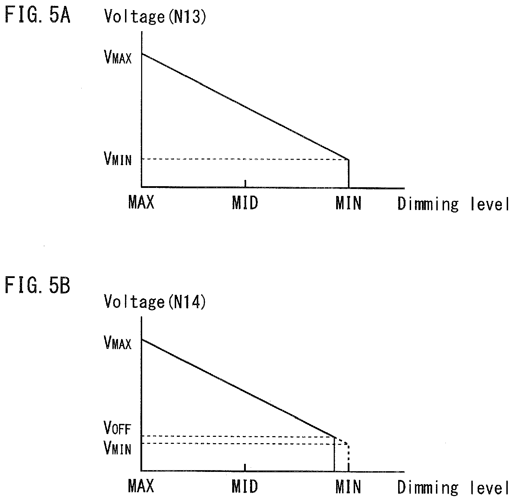

FIG. 4 only illustrates voltage waveforms when the dimming level is at three levels, namely at the highest, intermediate and the lowest levels. On the other hand, FIG. 5A illustrates a change in voltage at the node N13 when the dimming level is continuously changed from the highest level to the lowest level, and FIG. 5B illustrates a change in voltage at the node N14 when dimming level is continuously changed from the highest level to the lowest level.

FIG. 5A shows that the voltage at the node N13 reduces continuously from V_{MAX} to V_{MIN} when the dimming level is changed from the highest level to the lowest level. V_{MAX} corresponds to 4 V, and V_{MIN} corresponds to 1.08 V. On the other hand, when the dimming level is changed from the highest level to the lowest level, the voltage at the node N14 reduces continuously from V_{MAX} to V_{OFF}, and becomes zero after being reduced to V_{OFF}. V_{MAX} corresponds to 4 V, and V_{OFF} corresponds to the Zener voltage of the Zener diode D7.

The voltage at the PWM limit terminal (voltage at the node N14) of the LED driver U1 becomes 0 V, the on-time in the PWM control becomes 0 µs and the LED lamp is turned off. Accordingly, the brightness of the LED lamp is reduced by reducing the dimming level set by the dimmer 45, and the LED lamp is turned off when the dimming level becomes equal to the predetermined level immediately before reaching the lowest level.

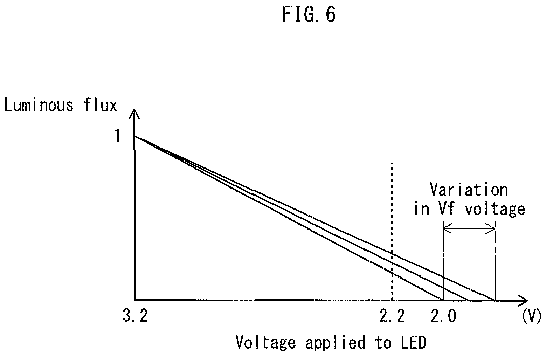

FIG. 6 illustrates a relation between voltage applied to each LED and a luminous flux. In FIG. 6, the luminous flux when the applied voltage is 3.2 V is set to 1. As can be seen from FIG. 6, a timing at which each LED is turned off by reducing the applied voltage varies among LEDs as there is an error in Vf voltage among LEDs. In a case where a single dimmer is used to dim a plurality of LEDs together, lighted LEDs and unlit LEDs are mixed together when the dimming level is near the lowest level (e.g. 1.9 V).

In order to solve the above problem, by forcibly turning off the LEDs at voltage higher than the maximum value of tolerance of Vf voltage of the LEDs (e.g. at 2.2 V that is 10% higher than the maximum value of tolerance 2.0 V), the timing at which each LED is turned off can be the same. The Zener diode D7 is used to forcibly turn off the LEDs. The Zener voltage of the Zener diode D7 should be appropriately designed considering specifications for the LED driver and for the dimming level detection circuit. For example, as the Zener voltage, voltage appearing at the node N13 when voltage applied to the LED module 3 equals voltage (58.2 V) obtained by multiplying the maximum value of tolerance of Vf voltage of LEDs (e.g. 2.0 V), the number of LEDs connected in series (e.g. 24) and a 10% margin may be used. Note that an error in Zener voltage among Zener diodes is considered to be smaller than an error in Vf voltage among LEDs, and therefore an effect of the present invention is expected in the present embodiment.

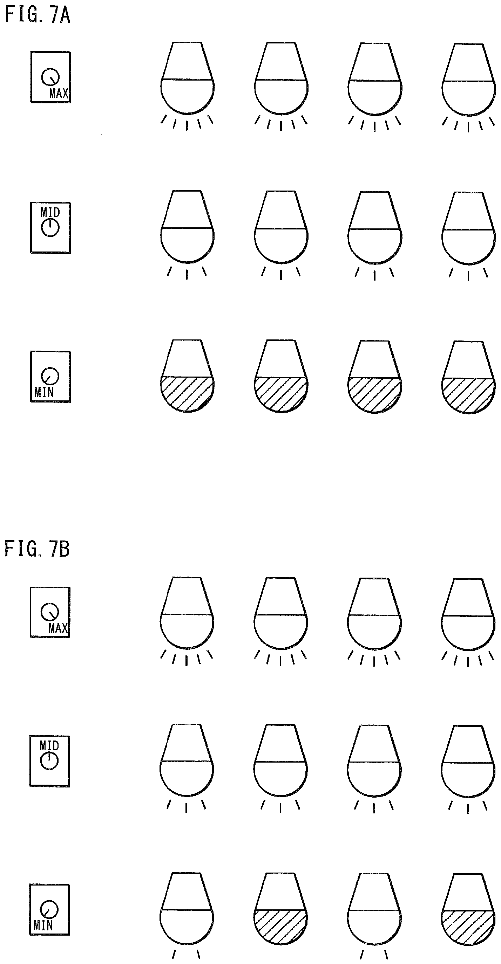

FIGs. 7A and 7B schematically illustrate an effect of Embodiment 1 of the present invention, and each illustrate cases where a single dimmer is used to dim four LED lamps together. As illustrated in FIG. 7A, in the present embodiment, as the dimming level set by the dimmer 45 reduces, brightness of each LED lamp is gradually reduced, and four LED lamps are simultaneously turned off immediately before the dimming level reaches the lowest level (MIN). On the other hand, as illustrated in FIG. 7B, with conventional technology, as the dimming level set by the dimmer 45 reduces, brightness of each LED lamp is gradually reduced, but lighted LED lamps and unlit LED lamps are mixed together when the dimming level is at the lowest level (MIN).

As described above, the present embodiment prevents lighted LED lamps and unlit LED lamps from being mixed together when the dimming level is near the lowest level (MIN).

### (First example)

### <Circuit Configuration>

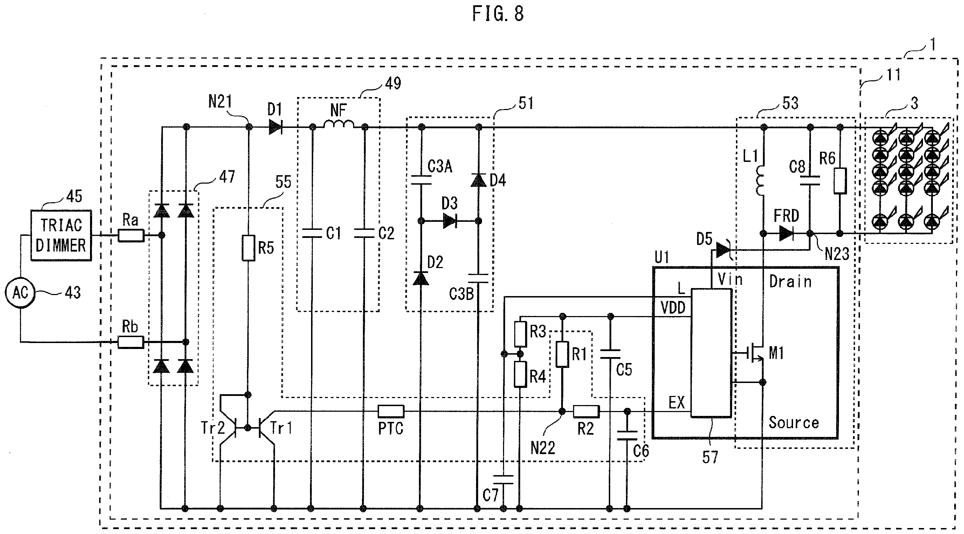

FIG. 8 is a circuit diagram for a lighting circuit included in a lamp in a first example.

The lighting circuit 11 mainly includes a rectification circuit 47, a noise filter circuit 49, a power-factor improvement circuit 51, a switching power supply unit 53, a dimming level detection circuit 55 and a control circuit 57. The following describes a configuration of each of the switching power supply unit 53, the dimming level detection circuit 55 and the control circuit 57.

The switching power supply unit 53 is a buck-boost chopper DC-DC converter. Specifically, the switching power supply unit 53 includes an inductor L1, a switching element M1, a rectifying element FRD, a capacitor C8 and a resistance element R6.

The dimming level detection circuit 55 includes resistance elements R1, R2 and R5, transistors Tr1 and Tr2, a capacitor C6 and a positive thermistor PTC. A collector terminal of the transistor Tr2 is connected to a positive terminal of the rectification circuit 47 via the resistance element R5. An emitter terminal of the transistor Tr2 is connected to a negative terminal of the rectification circuit 47. A base terminal of the transistor Tr2 is connected to the collector terminal. Also, a collector terminal of the transistor Tr1 is connected to a constant-voltage terminal VDD via the resistance element R1. An emitter terminal of the transistor Tr1 is connected to the negative terminal of the rectification circuit 47. The base terminal of the transistor Tr2 is connected to a base terminal of the transistor Tr1. The transistors Tr1 and Tr2 constitute a current mirror circuit. A first terminal of the capacitor C6 is connected to a control input terminal EX of the control circuit 57, and is also connected to a node N22 via the resistance element R2. A second terminal of the capacitor C6 is connected to the negative terminal of the rectification circuit 47. The positive thermistor PTC is an element having a resistance that increases nonlinearly with an increase in temperature. The positive thermistor PTC is inserted into a line connecting the collector terminal of the transistor Tr1 and a node N22, and functions as a temperature control switch that changes the brightness of the LED module 3 in response to temperature changes.

The control circuit 57 performs on-off control on the switching element M1. An LED driver U1 made by sealing the switching element M1 and the control circuit 57 in a single package may be used. In the present example, Panasonic's MIP551 or MIP552 is used as the LED driver U1.

A power supply input terminal Vin of the LED driver U1 is a terminal that receives power to cause the control circuit 57 to operate. In the present example, minimum voltage input to the power supply input terminal Vin is 45 [V]. The power supply input terminal Vin is connected to a second terminal of the capacitor C8 (i.e. an output terminal of the switching power supply unit 53 with higher potential) via a power supply line.

The constant-voltage terminal VDD of the LED driver U1 is a terminal that outputs constant voltage (e.g. 5.8 [V]) generated by a constant-voltage source in the control circuit 57.

The control input terminal EX of the LED driver U1 is a terminal that receives a dimming signal indicating the dimming level set by the dimmer 45.

The control circuit 57 has a function of stopping operations when the voltage input from the alternating-current power supply 43 exceeds an upper limit or falls below a lower limit. A control input terminal L of the LED driver U1 is a terminal that receives voltage for setting the upper limit and the lower limit of the input voltage. The present example is on the assumption that the input voltage changes according to the dimming level. Therefore, the upper limit and the lower limit of the input voltage are not set. This structure is achieved by appropriately setting resistance of each of the resistance elements R3 and R4. By performing on-off control on the switching element M1 at high frequencies (e.g. 44 [kHz]), the control circuit 57 applies constant current to the LED module 3. In the present example, the higher the voltage input to the control input terminal EX is, the smaller a magnitude of the constant current is.

In the present example, a Zener diode D5 that defines a timing at which each LED is turned off is inserted into a power supply line connecting the power supply input terminal Vin of the LED driver U1 and the output terminal of the switching power supply unit 53 (node N23). Zener voltage of the Zener diode D5 is approximately 52 V, for example. The Zener voltage is obtained by multiplying the maximum value of tolerance of Vf voltage of LEDs (e.g. 2.0 V), the number of LEDs connected in series in the LED module (e.g. 24) and a margin (10%). In this case, as the dimming level set by the dimmer 45 reduces, the voltage input to the power supply input terminal Vin is reduced, and the input voltage becomes zero immediately before the dimming level is at the lowest level. Therefore, the LED driver U1 stops operating, and the LED lamp is turned off.

Accordingly, it becomes possible to prevent lighted LED lamps and unlit LED lamps from being mixed together when the dimming level is near the lowest level (MIN).

### (Second example)

### <Circuit Configuration>

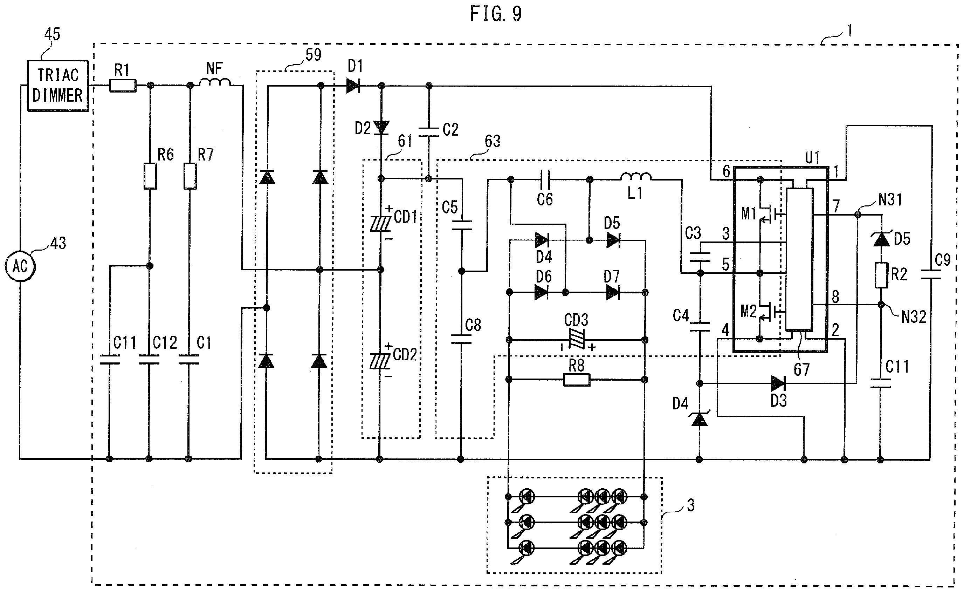

FIG. 9 is a circuit diagram for a lighting circuit included in a lamp in a second example.

The lighting circuit mainly includes a rectification circuit 59, a smoothing circuit 61, a switching power supply unit 63 and a control circuit 67. The following describes a configuration of each of the switching power supply unit 63 and the control circuit 67.

The switching power supply unit 63 is a half bridge DC-DC converter. Specifically, the switching power supply unit 63 includes a half bridge circuit, an LC resonant circuit, a rectification circuit and a smoothing circuit. The half bridge circuit includes switching elements M1 and M2, and capacitors C5 and C8. The LC resonant circuit includes an inductor L1 and a capacitor C6. The rectification circuit includes rectification elements D4, D5, D6 and D7. The smoothing circuit includes a capacitor CD3.

The control circuit 67 performs on-off control on the switching elements M1 and M2. An LED driver U1 made by sealing the switching elements M1, M2, and the control circuit 67 in a single package may be used. In the present example, NXP's UBA2024 is used as the LED driver U1.

A pin 7 of the LED driver U1 is a VDD terminal for outputting direct voltage of approximately 12 V generated by a regulator circuit built into the control circuit 67.

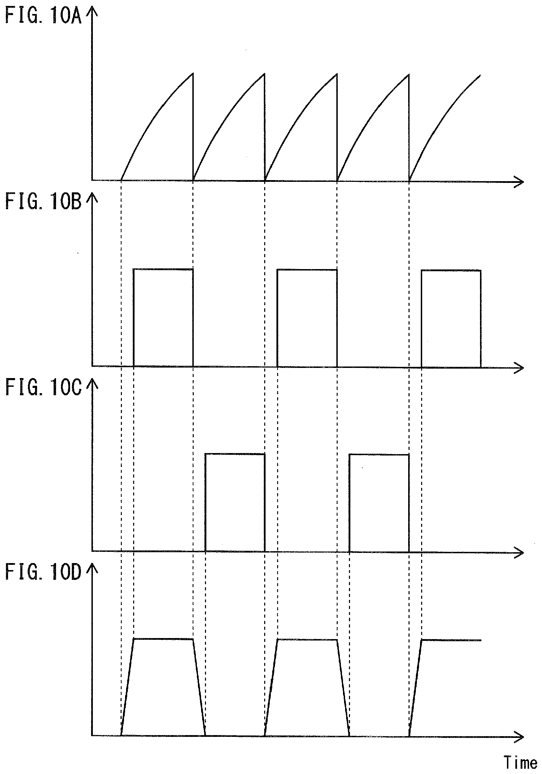

A pin 8 of the LED driver U1 is a terminal for generating triangular waves used for the PWM control. Specifically, the control circuit 67 includes therein a circuit for detecting voltage at the pin 8, and a switching element that shorts the pins 8 and 2 when the voltage at the pin 8 reaches predetermined voltage. When voltage of 12 V is output from the VDD terminal, the capacitor C11 is charged with time constant determined by resistance of a resistance element R2 and capacitance of a capacitor C11. Therefore, voltage at the pin 8 gradually increases. When the voltage at the pin 8 reaches the predetermined voltage, the pins 8 and 2 are shorted to instantaneously discharge the capacitor C11. Such an operation generates triangular waves. FIGs. 10A to 10D each illustrate oscillation. FIG. 10A illustrates voltage at the pin 8, FIG. 10B illustrates gate voltage of the switching element M1, FIG. 10C illustrates gate voltage of the switching element M2, and FIG. 10D illustrates voltage at a pin 5.

In the present example, a Zener diode D5 that defines a timing at which each LED is turned off is inserted into a signal line connecting nodes N31 and N32 so as to be in series with the resistance element R2. Even when the dimming level set by the dimmer 45 reduces, the voltage output from the VDD terminal is considered to be maintained at approximately 12 V for a while by a function of the regulator circuit. The voltage output from the VDD terminal, however, is gradually reduced as the dimming level approaches the lowest level. When the voltage output from the VDD terminal becomes equal to or lower than the Zener voltage of the Zener diode D5, generation of triangular waves is stopped and LED lamps are turned off.

Accordingly, it becomes possible to prevent lighted LED lamps and unlit LED lamps from being mixed together when the dimming level is near the lowest level (MIN).

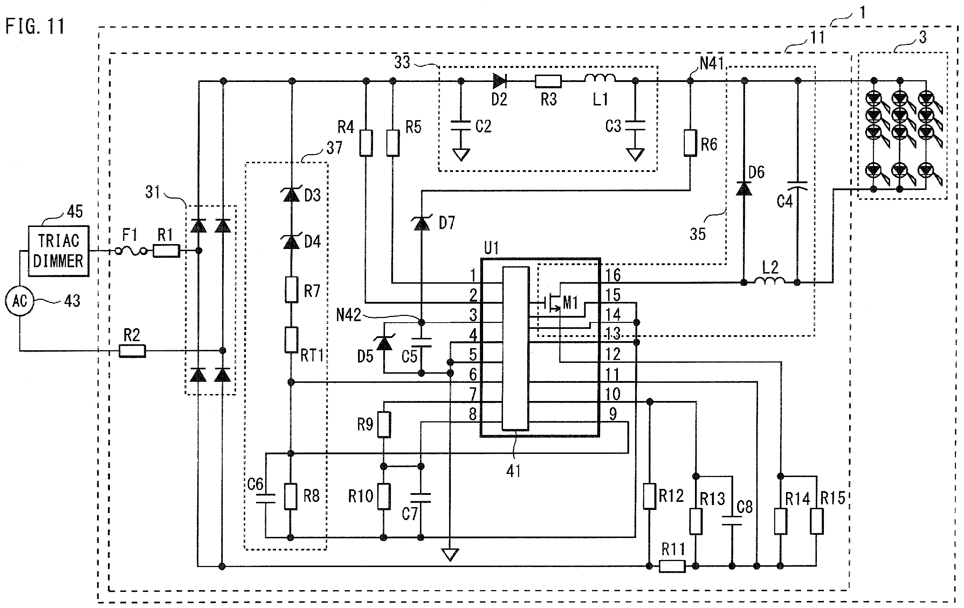

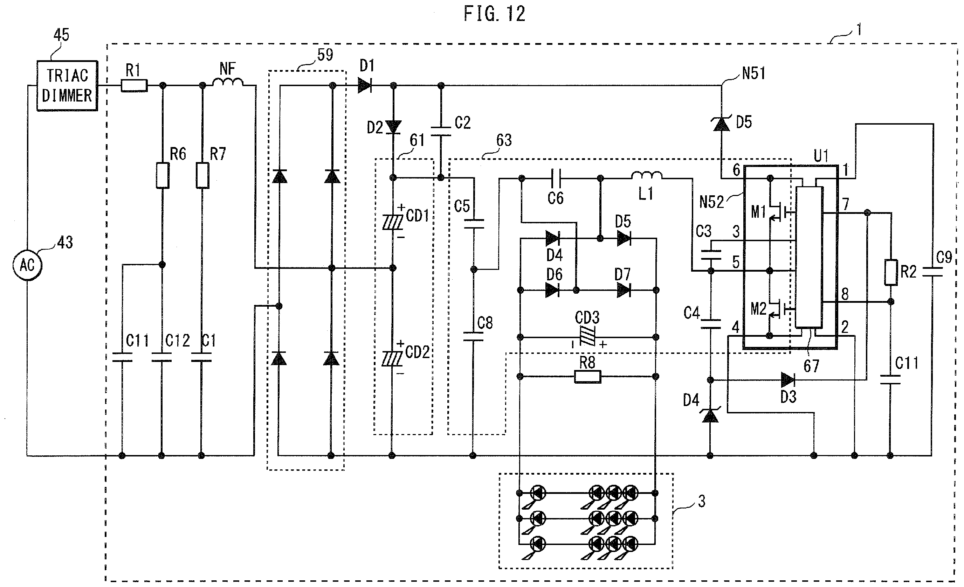

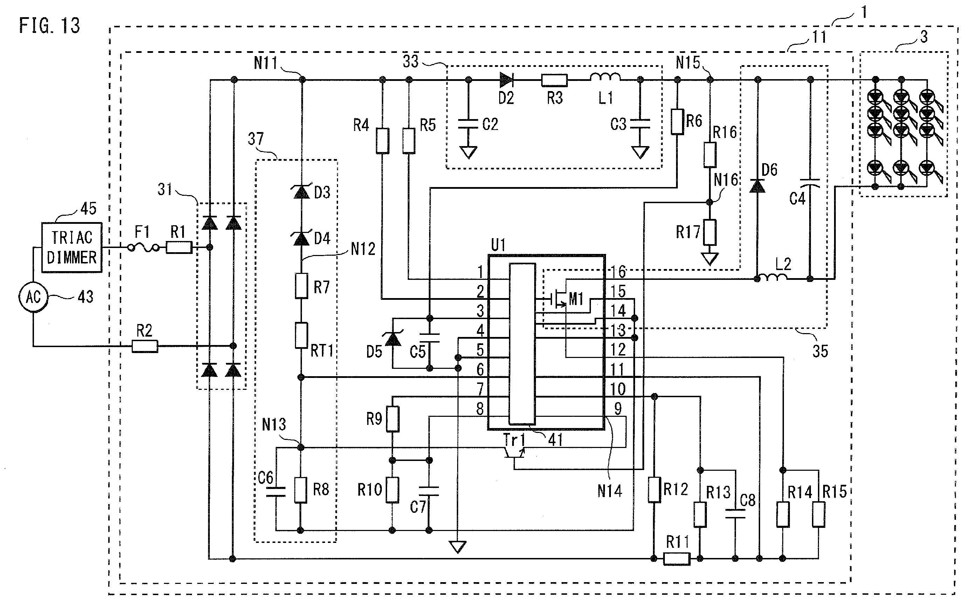

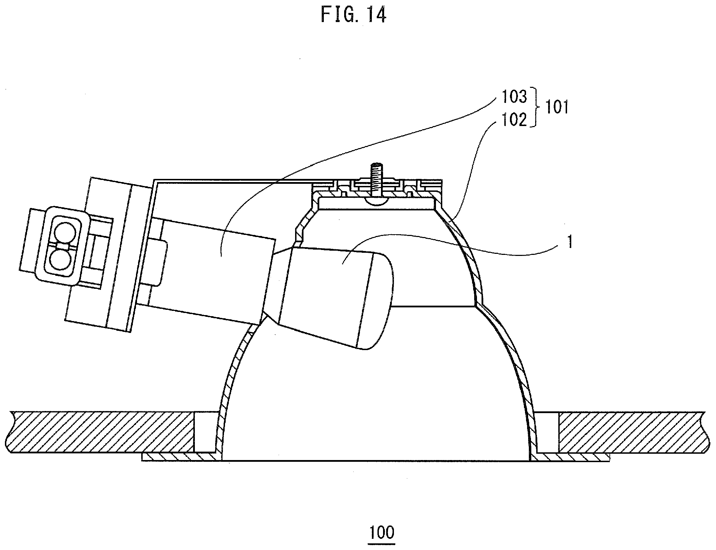

The following modifications are conceivable.
(1) In Embodiment 1, the Zener diode D7 that defines a timing at which each LED is turned off is inserted into the signal line connecting the output terminal of the dimming level detection circuit 37 and the PWM limit terminal. The present invention, however, is not limited to this structure. The Zener diode D7 may be inserted into the power supply line connecting the output terminal of the noise filter circuit 33 (node N41) and the power supply input terminal (node N42) as illustrated in FIG. 11. As the dimming level set by the dimmer 45 reduces, voltage output from the noise filter circuit 33 reduces. When the voltage output from the noise filter circuit 33 becomes equal to or lower than the Zener voltage of the Zener diode D7, the voltage input to the power supply input terminal becomes zero, and thus the control circuit 41 stops operating. As a result, the LED lamps are turned off.
   Also, in the second example, the Zener diode D5 that defines a timing at which each LED is turned off is connected in series with the resistance element R2. The present invention, however, is not limited to this structure. The Zener diode D5 may be inserted into the power supply line connecting an output terminal of the rectification circuit 59 (node N51) and a pin 6 of the LED driver U1 as illustrated in FIG. 12.
(2) In Embodiment 1, a Zener diode is used as the switching element that switches off when the dimming level set by the dimmer becomes equal to or lower than the predetermined level. The present invention is not limited to this structure. The transistor Tr1 may be used as the switching element as illustrated in FIG. 13. A gate of the transistor Tr1 is connected to an output terminal of a resistor voltage divider composed of resistance elements R16 and R17 (node N16). As the dimming level set by the dimmer reduces, voltage at a node N15 reduces. Therefore, voltage at the node N16 reduces accordingly. The transistor Tr1 switches off with the above-mentioned structure. The above-mentioned structure is also applicable to the first and second examples.
(3) Specific names of products are indicated as the LED driver. In the present invention, however, the LED driver is not limited to that indicated in the above embodiments. Another product may be used as the LED driver.
(4) Each of the above embodiment and examples only discloses the lamp. The lamp, however, may be combined with a lighting fixture to be used as a lighting device. FIG. 14 illustrates a configuration of the lighting device. The lighting device 100 includes the lamp 1 and a lighting fixture 101. The lighting fixture 101 includes a bowl-shaped reflecting mirror 102 and a socket 103. The base member 15 of the lamp 1 is screwed into the socket 103.

### [Industrial Applicability]

The present invention is applicable to a general lighting, for example.

### [Reference Signs List]

- 1: lamp
- 3: LED module
- 5: mounting member
- 7: case
- 9: globe
- 11: lighting circuit
- 13: circuit holder
- 15: base member
- 17: insulating substrate
- 19: sealing body
- 21: screw
- 23: adhesive agent
- 25: insulating substrate
- 27: wire
- 31: rectification circuit
- 33: noise filter circuit
- 35: switching power supply unit
- 37: dimming level detection circuit
- 41: control circuit
- 43: alternating-current power supply
- 45: dimmer
- 47: rectification circuit
- 49: noise filter circuit
- 51: power-factor improvement circuit
- 53: switching power supply unit
- 55: dimming level detection circuit
- 57: control circuit
- 59: rectification circuit
- 61: smoothing circuit
- 63: switching power supply unit
- 67: control circuit
- 100: lighting device
- 101: lighting fixture
- 102: reflecting mirror
- 103: socket

## Claims

1. A lighting circuit (11), which is configured to receive power from an alternating-current power supply (43) via a dimmer (45) to light a plurality of LEDs (3), the lighting circuit comprising:
a rectification circuit (31) configured to be connected to the dimmer (45) and configured to provide pulsating voltage output depending on a dimming level set by the dimmer (45);
a capacitance (C6) for smoothing the pulsating voltage output to form a direct voltage;
a second switching element (D7, Tr1) that receives the direct voltage;
a switching power supply unit (35) connected between the rectification circuit (31) and the plurality of LEDs (3), the switching power supply unit (35) including a first switching element (M1); **characterized in**
a control circuit (41) that receives the direct voltage via the second switching element and that is configured to use the direct voltage as a dimming signal indicative of the dimming level set by the dimmer, the control circuit further being connected to the first switching element (M1) and configured to perform on-off control on the first switching element so as to adjust power to be supplied to the plurality of LEDs in correspondence with the direct voltage; wherein
the second switching element is configured to let the direct voltage pass and thus cause the control circuit (41) to perform the on-off control on the first switching element (M1) as long as the direct voltage is higher than a predetermined level, and configured to block the direct voltage and thus cause the control circuit (41) to stop performing the on-off control on the first switching element (M1) as long as the direct voltage is equal to or lower than the predetermined level, such that no power is supplied to the plurality of LEDs as long as the direct voltage is equal to or lower than the predetermined level.

2. The lighting circuit of claim 1, further comprising
a dimming level detection circuit (37) comprising the capacitance (C6) and configured to detect the dimming level set by the dimmer (45) and to provide the direct voltage, wherein
the second switching element (D7) is inserted into a signal line connecting the dimming level detection circuit (37) and the control circuit (41).

3. The lighting circuit of claim 2, wherein
the second switching element is a Zener diode (D7).

4. The lighting circuit of claim 2, wherein
the second switching element is a transistor (Tr1).

5. The lighting circuit of claim 2, wherein
the dimming level detection circuit (37) includes:
a resistor voltage divider (R7, RT1, R8);
the capacitance (C6) configured to smooth a voltage output from the resistor voltage divider; and
a Zener diode (D3, D4) inserted into a signal line connecting the rectification circuit (31) and the resistor voltage divider.

6. The lighting circuit of claim 2, wherein
the dimming level detection circuit (37) includes:
a Zener diode (D4) having an anode and a cathode, the cathode being connected to a positive output terminal of the rectification unit (31);
a first resistor (R7) having a first terminal and a second terminal, the first terminal being connected to the anode of the Zener diode (D4);
a second resistor (R8) having a third terminal and a fourth terminal, the third terminal being connected to the second terminal of the first resistor (R7); wherein
the capacitance (C6) is connected in parallel to the second resistor (R8); and
wherein
a voltage output across the third terminal and the fourth terminal of the second resistor (R8) forms the direct voltage indicating the dimming level.

7. A lamp (1) comprising:
the lighting circuit (11) of claim 1; and
the plurality of LEDs (3) connected to the switching power supply unit (35) included in the lighting circuit.

8. A lighting device (100) comprising:
the lamp (1) of claim 7; and
a lighting fixture (101).

## Patentansprüche

1. Beleuchtungsschaltkreis (11), der ausgebildet ist, Leistung von einer Wechselstrom-Leistungsversorgung (43) über einen Dimmer (45) zu empfangen, um eine Vielzahl von LEDs (3) zum Leuchten zu bringen; wobei der Beleuchtungsschaltkreis enthält:
- einen Gleichrichterschaltkreis (31), der ausgebildet ist, mit dem Dimmer (45) verbunden zu sein und eine pulsierende Spannungsausgabe bereitzustellen, die von einem durch den Dimmer (45) gesetzten Dimmpegel abhängig ist,
- eine Kapazität (C6) zum Glätten der pulsierenden Spannungsausgabe, um eine Gleichspannung zu bilden,
- ein zweites Schaltelement (D7, Tr1), das die Gleichspannung empfängt,
- eine Schaltnetzteil-Einheit (35), die zwischen dem Gleichrichterschaltkreis (31) und der Vielzahl von LEDs (3) verbunden ist, wobei die Schaltnetzteil-Einheit (35) ein erstes Schaltelement (M1) enthält; **gekennzeichnet durch**
- einen Steuerschaltkreis (41), der die Gleichspannung über das zweite Schaltelement empfängt und der ausgebildet ist, die Gleichspannung als ein Dimmsignal zu nutzen, das den durch den Dimmer gesetzten Dimmpegel anzeigt, wobei der Steuerschaltkreis zusätzlich mit dem ersten Schaltelement (M1) verbunden und ausgebildet ist, eine An-Aus-Steuerung des ersten Schaltelementes durchzuführen, um die an die Vielzahl von LEDs auszugebende Leistung entsprechend der Gleichspannung anzupassen; wobei
- das zweite Schaltelement ausgebildet ist, die Gleichspannung passieren zu lassen und damit zu bewirken, dass der Steuerschaltkreis die An-Aus-Steuerung des ersten Schaltelements (M1) durchführt, solange die Gleichspannung größer ist als ein vorbestimmter Pegel, sowie ausgebildet ist, die Gleichspannung zu blockieren und damit zu bewirken, dass der Steuerschaltkreis die Durchführung der An-Aus-Steuerung des ersten Schaltelementes (M1) stoppt, solange die Gleichspannung gleich oder kleiner als der vorbestimmte Pegel ist, so dass keine Leistung an die Vielzahl von LEDs ausgegeben wird, solange die Gleichspannung gleich oder kleiner als der vorbestimmte Pegel ist.

2. Beleuchtungsschaltkreis nach Anspruch 1, zusätzlich aufweisend:
- einen Dimmpegeldetektionsschaltkreis (37), der die Kapazität (C6) enthält und ausgebildet ist, den durch den Dimmer (45) gesetzten Dimmpegel zu detektieren und die Gleichspannung bereitzustellen, wobei
- das zweite Schaltelement (D7) in eine Signalleitung eingefügt ist, die den Dimmpegeldetektionsschaltkreis (37) und den Steuerschaltkreis (41) verbindet.

3. Beleuchtungsschaltkreis nach Anspruch 2, bei dem das zweite Schaltelement eine Zener-Diode (D7) ist.

4. Beleuchtungsschaltkreis nach Anspruch 2, bei dem das zweite Schaltelement ein Transistor (Tr1) ist.

5. Beleuchtungsschaltkreis nach Anspruch 2, bei dem der Dimmpegeldetektionsschaltkreis (37) beinhaltet:
- einen Widerstandsspannungsteiler (R7, RT1, R8);
- die Kapazität (C6), die ausgebildet ist, eine vom Widerstandsspannungsteilers ausgegebene Spannung zu glätten; und
- eine Zener-Diode (D3, D4), eingefügt in eine Signalleitung, die den Gleichrichterschaltkreis (31) und den Widerstandsspannungsteiler verbindet.

6. Beleuchtungsschaltkreis nach Anspruch 2, bei dem der Dimmpegeldetektionsschaltkreis (37) beinhaltet:
- eine Zener-Diode (D4), die eine Anode und eine Kathode aufweist, wobei die Kathode mit einem positiven Ausgabeanschluss des Gleichrichterschaltkreises (31) verbunden ist;
- einen ersten Widerstand (R7), der einen ersten und einen zweiten Anschluss aufweist, wobei der erste Anschluss mit der Anode der Zener-Diode (D4) verbunden ist;
- einen zweiten Widerstand (R8), der einen dritten und einen vierten Anschluss aufweist, wobei der dritte Anschluss mit dem zweiten Anschluss des ersten Widerstandes (R7) verbunden ist; wobei
- die Kapazität (C6) parallel zum zweiten Widerstand (R8) verbunden ist; und wobei
- eine über dem dritten und dem vierten Anschluss des zweiten Widerstandes (R8) ausgegebene Spannung die Gleichspannung bildet, die den Dimmpegel angibt.

7. Leuchtmittel (1), aufweisend:
- den Beleuchtungsschaltkreis (11) nach Anspruch 1; und
- die Vielzahl von LEDs (3), die mit der Schaltnetzteileinheit (35) verbunden sind, welche Bestandteil des Beleuchtungsschaltkreises ist.

8. Beleuchtungsvorrichtung (100), aufweisend:
das Leuchtmittel (1) nach Anspruch 7 und eine Beleuchtungsarmatur (101).

## Revendications

1. Circuit d'éclairage (11) qui est configuré pour recevoir de la puissance d'une alimentation de puissance en courant alternatif (43) via un gradateur (45) afin d'allumer une pluralité de DELs (3), le circuit d'éclairage comprenant:
- un circuit de redressement (31) configuré pour être connecté au gradateur (45) et configuré pour fournir une sortie de tension pulsée qui est fonction d'un niveau de gradation défini par le gradateur (45),
- une capacité (C6) pour lisser la sortie de tension pulsée afin de former une tension continue,
- un deuxième élément de commutation (D7, Tr1) qui reçoit la tension continue,
- une unité d'alimentation électrique de commutation (35) connectée entre le circuit de redressement (31) et la pluralité de DELs (3), ladite unité d'alimentation électrique de commutation (35) comprenant un premier élément de commutation (M1); **caractérisé par**
- un circuit de commande (41) qui reçoit la tension continue via le deuxième élément de commutation et qui est configuré pour utiliser la tension continue en tant que signal de gradation indiquant le niveau de gradation défini par le gradateur, le circuit de commande étant en outre connecté au premier élément de commutation (M1) et configuré pour effectuer une commande on-off du premier élément de commutation afin d'adapter la puissance à fournir à la pluralité de DELs en correspondance avec la tension continue, dans lequel
- le deuxième élément de commutation est configuré pour laisser passer la tension continue et amener ainsi le circuit de commande (41) à effectuer la commande on-off du premier élément de commutation (M1) tant que la tension continue est supérieure à un niveau prédéterminé, et est configuré pour bloquer la tension continue et amener ainsi le circuit de commande (41) à arrêter d'effectuer la commande on-off du premier élément de commutation (M1) tant que la tension continue est égale ou inférieure au niveau prédéterminé, de sorte qu'aucune puissance n'est fournie à la pluralité de DELs tant que la tension continue est égale ou inférieure au niveau prédéterminé.

2. Circuit d'éclairage selon la revendication 1, comprenant en outre:
- un circuit de détection de niveau de gradation (37) comprenant la capacité (C6) et configuré pour détecter le niveau de gradation défini par le gradateur (45) et pour fournir la tension continue, dans lequel
- le deuxième élément de commutation (D7) est inséré dans une ligne de signal reliant le circuit de détection de niveau de gradation (37) et le circuit de commande (41).

3. Circuit d'éclairage selon la revendication 2, dans lequel le deuxième élément de commutation est une diode Zener (D7).

4. Circuit d'éclairage selon la revendication 2, dans lequel le deuxième élément de commutation est un transistor (Tr1).

5. Circuit d'éclairage selon la revendication 2, dans lequel le circuit de détection de niveau de gradation (37) comprend:
- un diviseur de tension de résistance (R7, RT1 R8),
- la capacité (C6) configurée pour lisser une tension délivrée par le diviseur de tension de résistance; et
- une diode Zener (D3, D4) insérée dans une ligne de signal connectant le circuit de redressement (31) et le diviseur de tension de résistance.

6. Circuit d'éclairage selon la revendication 2, dans lequel le circuit de détection de niveau de gradation (37) comprend:
- une diode Zener (D4) ayant une anode et une cathode, la cathode étant connectée à une borne de sortie positive du circuit de redressement (31),
- une première résistance (R7) ayant une première borne et une deuxième borne, la première borne étant connectée à l'anode de la diode Zener (D4),
- une deuxième résistance (R8) ayant une troisième borne et une quatrième borne, la troisième borne étant connectée à la deuxième borne de la première résistance (R7), dans lequel
- la capacité (06) est connectée en parallèle à la deuxième résistance (R8), et dans lequel
- une tension délivrée via les troisième borne et quatrième borne de la deuxième résistance (R8) constitue la tension continue indiquant le niveau de gradation.

7. Lampe (1) comprenant:
- le circuit d'éclairage (11) selon la revendication 1, et
- la pluralité de DELs (3) connectées à l'unité d'alimentation électrique de commutation (35) incluse dans le circuit d'éclairage.

8. Dispositif d'éclairage (100) comprenant:
la lampe (1) selon la revendication 7 et un dispositif de fixation d'éclairage (101).
